# EUROPEAN PATENT SPECIFICATION

(11) **EP 1 189 513 B1**
(45) Date of publication and mention of the grant of the patent: **24.05.2006**
(21) Application number: 00981616.6
(22) Date of filing: 09.11.2000
(51) Int. Cl.: A01N 59/06, A01N 59/00

(54) **A COMPOSITION FOR STIMULATING THE INTERRUPTION OF DORMANCY OF THE BUDS OF FRUIT-BEARING PLANTS AND RELATED USE THEREOF**
ZUSAMMENSETZUNG ZUR STIMULIERUNG DER UNTERBRECHUNG DER DORMANZ VON KNOSPEN VON FRUCHTTRAGENDEN PFLANZEN UND IHRE VERWENDUNG
COMPOSITION DESTINEE A STIMULER L'INTERRUPTION DE LA DORMANCE DES BOURGEONS DE PLANTES FRUITIERES ET UTILISATION CORRESPONDANTE

(30) Priority: 29.11.1999 IT RM990728
(43) Date of publication of application: 27.03.2002
(73) Proprietor: Valagro S.p.A., 66040 Piazzano di Atessa (CH) (IT)
(72) Inventor: CAMPA, Camillo, I-73010 Lequile (IT)
(74) Representative: Tansini, Elio Fabrizio
(86) International application number: PCT/IT2000/000451
(87) International publication number: WO 2001/037653

(56) References cited:
- WO-A-01/05227
- WO-A-96/01049
- WO-A-97/24926
- DE-A- 3 823 539
- GB-A- 1 604 321
- US-A- 4 487 625

## Description

### Technical Field

The present invention relates to a composition for stimulating the interruption of dormancy of the buds of fruit-bearing plants and to a method for its application. In particular, the present invention relates to a composition for stimulating the interruption of dormancy of buds of fruit-bearing plants with deciduous leaves, which comprises nutrients able to stimulate nitrogen metabolism.

### Background Art

Treatments for interrupting bud dormancy are known. In the case of plants in which the high demand for cold is not met by the cultivation environment and, which, persist in a dormant state, treatments have long been used, based on substances whose physiological function is not wholly clear as is the case for mineral oil with DiNitroOrthoCresols (DNOC). The effectiveness of these treatments is all the greater, the more their execution is delayed, i.e. near the opening of the buds. However, the risk of phytotoxicity increase as the season advances, given the higher temperatures in springtime.

Products based on DiNitroOrthoCresols (DNOC) are not free from drawbacks: DiNitroOrthoCresols are insecticides with a toxic action on animals and man and may give rise to phytotoxicity phenomena. Moreover, DiNitroOrthoCresols have a tenuous effect on advancing the interruption of dormancy.

Another substance whose positive effect on advancing budding in fruit-bearing plant has been verified by numerous authors is represented by hydrogen cyanamide (CH₂N₂). The product is applied during mild winters when the demand for cold is not met. According to some researchers, these compounds act as respiration inhibitors, reducing catalatic activity and consequently causing an excessive accumulation of peroxides which would lead glucide metabolism to veer towards pentose phosphates, indicating the production of nucleotides essential for an intense metabolism. According to other hypotheses, the increase in peroxides would cause an increase in glutathione, which is considered responsible for a rapid increase in arginine and probably of polyamines. Hydrogen cyanamide based products, however, are also not free of drawbacks: hydrogen cyanamide is a chemical compound causing skin and eye irritation especially if used in combination with alcohol products. Moreover, hydrogen cyanamide causes frequent problems of phytotoxicity especially on peach tree varieties since the relationship between dosage, time of employment, and variety is not known. DiNitroOrthoCresols (DNOC) and hydrogen cyanamide are chemical compounds acting directly on bud metabolism.

Another group of substances that act to interrupt the dormancy of fruit-bearing buds is represented by alkoxylated fatty amines. Fatty amines present some advantages over the aforementioned compounds, in terms of toxicity for man and insects. However, fatty amines are not free from drawbacks which severely restrict their usage: to be employed, fatty amines need to be combined with different agents which act to interrupt dormancy such as hydrogen cyanamide itself, a potassic salt of gibberellic acid, kinetin, indoleacetic acid, thiourea. Moreover, another drawback connected with the use of fatty amines is represented by the indeterminate nature of component concentration, which is reflected in a variability of the results according to location and type of crop.

Different botanical species have specific cold demands which generally differ from one another. Moreover, among the different cultivars of the same species there is often an extreme variability. For instance, dormancy breakthrough in peach and apricot crops is considerably different from that of other crops such as cherry and grape: whereas in the latter crops the awakening metabolism is accelerated proportionately to the quantity of nutrients provided during the rest phase, in the peach and apricot trees the nature of the nutrients is the same but the saturation threshold has lower values which vary for different cultivars.

It is well known that all organisms respond to each environmental parameter according to the "saturation model": when an environmental parameter (for instance, a chemical) presents an increase in concenrration, a threshold is reached above which an effect starts to manifest itself and the response increases until the system is saturated by the parameter itself. Subsequently, if product concentration continues to increase, the response may remain constant or it may start to decrease if the high level of product concentration becomes toxic or inhibiting. The "saturation" concept can be interpreted with the hypothesis that the plant uses a given product until its ability to use it is exhausted or saturated. Higher than optimal concentrations can become toxic because the nutrients start to interact with different systems of the organism from those that intervene in the upwardly sloping part of the curve.

WO 97/24926 provides compositions to be used in a method for enhancing rest-breaking in deciduous fruit-trees. Said compositions can comprise highly toxic compounds.

Therefore, the need remains to have available on the market a composition for stimulating the interruption of dormancy in fruit-bearing buds which overcomes the drawbacks of the prior art. In particular, the need remains to have a composition that has a limited impact on the environment. More specifically yet, the need remains to have a composition that is not phytotoxic.

### Disclosure of Invention

One of the aims of the present invention is to provide a composition having very limited toxicity for man, for animals and for insects.

Another aim of the present invention is to provide a composition having a diversified action for different crops thereby allowing to establish precise employment procedures for the different crops.

Yet another aim of the present invention is to provide a calibrated composition in such a way as to minimise the risks of phytotoxicity.

A further aim of the present invention is to provide a composition whose compounds do not lead to saturation in the host plant.

These aims and others beside, which shall become readily apparent from the detailed description that follows, have been achieved by the Applicant through the formulation of a composition comprising nitrogenous compounds.

Therefore, the subject of the present invention is a composition for stimulating the interruption of dormancy in the buds of fruit-bearing plants.

A further subject of the present invention is a method for stimulating the interruption of dormancy in the buds of fruit-bearing plants comprising the application of said composition to said buds.

The essential characteristics of the aforementioned composition and of the related method for its application are defined in the accornpanying main claims; some particular preferred, but not limiting, embodiments, are defined in the dependent claims.

### Description of the Illustrative Embodiment

The Applicant has found it useful to employ particular nitrogenous compounds of inorganic origins in association with particular non-ionic surface-active compounds to stimulate the interruption of dormancy in the buds of fruit-bearing plants.

The nitrogenous compound of inorganic origin is selected among one or more compounds of Group A which comprises: nitrates of alkaline metals, nitrates of earthy alkaline metals, ammonium nitrates and other ammonium salts.

Non-ionic surface-active compounds are selected among one or more compounds of Group B which comprises: alkene oxides (such as ethylene oxides, propylene oxides) made to react with nonyl-phenol or fatty acids or alkylpolyglucosides.

The present invention concerns
a product for stimulating the interruption of dormancy of the buds of fruit-bearing plants, characterized in that it comprises an association of:
a) a composition comprising at least one compound selected from Group A and at least one compound selected from Group B, wherein:
   - Group A consists of nitrates of alkaline metals or nitrates of earthy alkaline metals or ammonium nitrate;
   - Group B comprises alkene oxides, selected from the group consisting of ethylene oxide and propylene oxide, made to react with nonylphenol or fatty acids or alkylpolyglucosides; in combination with
b) calcium nitrate.

Preferably, in the composition of the present invention the compounds of the A and the compounds of Group B are present in a weight ratio ranging between 9:1 and 1:9; still more preferably, in a weight ratio ranging between 5:1 and 1:5.

Preferably, the composition of the present invention comprises as a compound of Group A sodium nitrate, potassium nitrate, calcium nitrate and magnesium nitrate.

Preferably, the composition of the present invention comprises as a compound of Group B nonylphenol made to react with ethylene oxide (belonging to the family of alkylphenols made to react with alkene oxides), lauric acid made to react with ethylene oxide (belonging to the family of alkylphenols made to react with alkene oxides), alkylpolyglucoside.

In a preferred embodiment, the composition of the present invention comprises ammonium nitrate and nonylphenol made to react with ethylene oxide.

In another preferred embodiment, the composition of the present invention comprises ammonium nitrate and lauric acid made to react with ethylene oxide.

Advantageously, the composition of the present invention further comprises in addition to one or more compounds selected from Group A and to one or more compounds selected from Group B, an organic matrix based on simple sugars and a nitrogenous matrix based on organic nitrogen.

The simple organic matrix sugars are preferably selected from the group that consists of fructose, glucose and galacturose.

The compositions of the present invention are applied in combination with calcium nitrate.

Preferably, the compositions of the present invention are solubilised in water until obtaining a solution that is applied to fruit-bearing plants using diffusion means.

A first preferred embodiment of the present invention is given by the composition 1), called Cl, which comprises:
a) ammonium nitrate, in a percentage ranging from 24 to 40% by weight;
b) anon-ionic surface-active compound selected among the following families of compounds such as alkene oxides (for instance ethylene oxide, propylene oxide) made to react with nonylphenol or lauric acid or alkylpolyglucosides (APGs), in a percentage ranging from 5 to 32% by weight;
c) organic matrix based on simple sugars preferably selected among fructose, glucose, galacturose, in a percentage ranging from 1 to 7% by weight;
d) organic nitrogen-based nitrogenous matrix, in a percentage ranging from I to 11 % by weight;
e) aqueous solvent, in a percentage ranging from 10 to 42% by weight.

Advantageously, the surface-active compound in the composition C1 is nonylphenol made to react with ethylene oxide (in the composition denominated C1.1.); preferably, the surface-active compound in the composition C 1 is ethoxylated lauric acid (in the composition denominated C.1.2.); alternatively the surface-active compound in the composition C1 is alkylpolyglucoside (in the composition denominated C.1.3.).

The Applicant has developed experimental tests, employing the composition C 1 in its alternative forms, on the most widespread precocious and medium-precocious cultivars of Southern Italy. In particular, peach cultivars were Caldesi 200, Snow Queen, Rich May, Silvery, May Glow, Spring Lady, Spring Crest, May Crest, Armking, Early Star, Flavour Crest, Royal Glory; for apricots, tested cultivars were Tirynthos, Vitillo, Monocobello, Ceccone, Cafona. The peach cultivars Armking, May Glow, Spring Lady, Snow Queen, and the apricot cultivar Tirynthos were tested several times in different agricultural companies. The Applicant verified a screening of the sensitivity of the different cultivars and an exam of the influence of different operating conditions.

The Applicant also assessed the action of the composition C 1 as a function of:
1) a different volume of solution (5 hl and 10 hl);
2) different employment periods (30, 45, and 60 days before bud opening);
3) different dosage both of the composition C1 (3%, 5% and 7% by weight in water) and of calcium nitrate (6%, 9% and 12% by weight in water).

During the awakening phase, the breakthrough capability of the composition C 1 on bud dormancy was assessed by computing the average of the percentage of open flowers measured on different dates on five (5) mixed branches located in the upper part of each plant of the different parcels. After the passage from flower to fruit, the average number of flower per plant was assessed. This test is important to detect any phytotoxicity phenomena connected to the early falling of buds in the closed stage, to the falling of flowers in full bloom, to the darkening of the mixed branches. The increased homogeneity of ripening on the plant and the earlier ripening relative to the control were assessed by measuring the percentage of fruits harvested during the first intervention.

A different perceptibility of the different cultivars to dormancy interruption treatments was noted.

A first category of tests bore witness to the positive response to the application of the products, i.e. proportional to the quantity of product administered. This category is represented by tests on the following cultivars: Spring Crest (no. 1 test), May Crest (no. 1 test), Armking (no. 3 tests), Spring Lady (no. 2 tests), Flavour Crest (no. 1 test), Early Star (no. I test). A second category of tests has shown that the increase in quantity of product brought about clear phytotoxicity problems already at the blooming level. This category is represented by the tests on the following cultivars: Caldesi 2000 (no. 1 test), Snow Queen (no. 1 test), Rich May (no. 1 test), Silver (no. I test), May Glow (no. 2 tests). The cultivars Snow Queen and Spring Lady exhibited a different behaviour in different location leading to the assumption that, in addition to the different perceptibility of the different cultivars, the effects of the application of the products for dormancy interruption is also conditioned by the climate pattern of the area where of operation.

Within the scope of perceptible cultivars, the pattern of blooming in the totality of the different tests, employing normal volumes, i.e. 1,000 l/ha, has constantly determined an effective action in terms of causing an earlier dormancy interruption.

The execution of the treatments 60 days before blooming has attenuated the action of the composition C 1 relative to employment at 45 days. Treatments at 30 days not only had substantially the same effect as treatments at 60 days but, in some cases, have favoured phytotoxicity phenomena (flower or fruit falling or branch darkening).

The increase in concentration of the composition C 1 from 5% to 7% and in the concentration of calcium nitrate from 9% to 12% has constantly caused a stronger action in dormancy interruption. In this sense, the increase in the concentration of the composition C 1 was more effective.

On the contrary, the reduction in the concentration of C 1 from 5% to 3% and in that of calcium nitrate from 9% to 6% has constantly led to a weakening of the effect. In this case as well, the reduction in C1 concentration had the more marked action.

Within the scope of the six (6) tests in which clear phytotoxicity phenomena manifested themselves, it was observed that while the use of higher volumes (1,000 l/ha) determined, on one hand, a greater breakthrough effectiveness on blooming, it also caused, on the other had, a falling of bloomed flowers when their percentage reached values of 30-60%.

The use of lower volumes (5 hl/la), instead, led to a more tenuous dormancy interruption action but it did allow a regular blooming of the plants treated with the composition Cl (5%) + calcium nitrate (9%). Treatments executed 30 days prior to awakening also caused blooms to fall; instead, treatment at 60 days confirmed the attenuation of product effectiveness. The increase in concentration of the composition Cl from 5% to 7% and in calcium nitrate from 9% to 12% had the same effect as the increase in solution volume in determining bloom fall. Lowering the dose, instead, avoided any problem but also reduced effectiveness.

Measuring the average number of fruits per plant, confirmation was found of the phytotoxicity phenomena observed in blooming.

During the ripening phase, in the control, the first harvesting intervention provided for the collection, in most cases, of about 20% of the total number of fruits. In the treated group, instead, the aforesaid collection at the same date was 40-60% in the case of usage of the compositions C I at 5 kg/100 litres (in addition to 9% calcium nitrate) and with 5 hl/ha of solution; for high volume or high dosage treatments, the percentage rose to 60-80%.

in areas where the demand for cold of the different cultivars is not met, the application of the composition C1 has performed the function of cold in constituting nutritional reserves, allowing buds to start the awakening metabolism earlier. In these locations, the composition C1 at 5% + calcium nitrate at 9% with a water volume of 5 hl/ha, has allowed to obtain a considerably earlier dormancy interruption, The increase in solution volume was found favourable for most cultivars, but in some tested cultivars (for instance. Caldesi 2000, Rich May, Silvery. May Glow) and under particular climatic conditions (the cultivar Snow Queen) it caused blooms or fruits to fall.

In regard to the time of employment the execution of the treatments sixty (60) and thirty (30) days before blooming has caused, along with a sharp difference from the control a significant reduction in the effect of the composition C1 relative to applications at forty-five (45) days. Thus, for peach and apricot, treatments executed 45 days prior to blooming, were those that optimised results and avoided collateral problems.

Increases in the dosage both of the composition C1 and of calcium nitrate had the same effect as increases in solution volume: hence, in resistant cultivars dormancy interruption effectiveness improved, whereas in sensitive cultivars phytotoxicity-phenomena-emerged. On the contrary, dosage reduction caused, in all cases, an attenuation in the effect of the treatments.

For cherry, apple, pear, and grape cultivars, the Applicant has identified a second preferred embodiment of the present invention which is given by the composition called C2, comprising:
a) ammonium nitrate, in a percentage ranging from 20 to 36% by weight;
b) a non-ionic surface-active compound selected among alkene oxides (for instance ethylene oxides propylene oxide) made to react with nonylphenol or lauric acid or alkylpolyglucosides (APGs), in a percentage ranging from 30 to 55% by weight;
c) organic matnx based on simple sugars preferably selected among fructose, glucose, galacturose, in a percentage ranging from 1 to 10% by weight;
d) organic nitrogen-based nitrogenous matrix, in a percentage ranging from 1 to 10% by weight;
e) aqueous solvent, in a percentage ranging from 10 to 40% by weight.

Advantageously, the surface-active compound in the composition C2 is nonylphenol made to react with ethylene oxide (in the composition denominated C2.1.); preferably, the surface-active compound in the composition C2 is lauric acid made to react with ethylene oxide (in the composition denominated C.2.2.); alternatively the surface-active compound in the composition C2 is alkylpolyglucoside (in the composition denominated C.2.3.).

A third preferred embodiment of the present invention is given by the composition 3), denominated C3, which comprises:
a) ammonium nitrate, in a percentage ranging from 24 to 30%;
b) a non-ionic surface-active compound selected among the following families of compounds such as ethylene oxide made to react with nonylphenol or lauric acid or alkylpolyglucosides (APGs), in a percentage ranging from 35 to 55% by weight;
c) organic matrix based on simple sugars preferably selected among fructose, glucose, galacturose, in a percentage ranging from 1 to 10% by weight;
d) organic nitrogen-based nitrogenous matrix, in a percentage ranging from 1 to 10% by weight;
e) citric acid, in a percentage ranging from 0.2 to 2% by weight;
f) aqueous solvent, in a percentage ranging from 10 to 40% by weight.

Advantageously, the surface-active compound in the composition C3 is nonylphenol made to react with ethylene oxide (in the composition denominated C3.1.); preferably, the surface-active compound in the composition C3 is lauric acid made to react with ethylene oxide (in the composition denominated C.3.2.); alternatively the surface-active compound in the composition C1 is alkylpolyglucoside (in the composition denominated C.3.3.).

The composition C3 is particularly well suited in the kiwi fruit crop, where it intervenes in the metabolism of the construction of the nutritional reserves of the buds, causing the interruption of their dormancy. Blooming is more uniform and a greater simultaneity is obtained between female plant and pollinator blooming.

Advantageously the composition 3) contains citric acid radicals.

Citric acid is an organic compound produced naturally by cells in the vital respiration process. The synthesis takes place in cellular organelles represented by mitochondria during the "tricarboxylic acid cycle". Citric acid can leave mitochondria by means of the transport system of the tricarboxylic acids and enter into the citosol (the cellular plasma), where it s radicals can act as negative modulators of phosphofructokinase. This is the enzyme that catalyses the phosphorylation of 6-phosphate fructose to 1,6-diphosphate fructose, which is a regulating reaction in the glycolysis process, the catabolic path through which cells extract chemical energy from various combustible molecules.

Citric acid radicals, therefore, lead to a decrease in glycolysis speed and, ultimately in cell respiration.

In the kiwi fruit, the presence of citric acid radicals during the inflorescence differentiation phase inhibits the formation of the lateral flowers, leaving unaltered the formation of the central flower (probably thanks to an apical dominance phenomenon which feeds this flower to a greater extent).

The chemical-physical characteristics of three particular compositions respectively of the C1.1 type, of the C2.1 type, and of the C3.1 type, are set out below:

| *COMPOSITION* | *pH* | *density* | *Nonylphenol*/*InorganicNitrogen* |
|---|---|---|---|
| C1.1. | 3.8 | 1.21 | 2.3:1 |
| C2.1. | 5.9 | 1.14 | 4.0:1 |
| C3.1. | 3.9 | 1.13 | 3.8:1 |

The Applicant has verified the action of the composition C2 on the cultivars of grape, in particular on the cultivar Italia, on the cultivar Matilde (one of the most precocious non apyrene cultivars) and on the cultivar Sugraone (apyrene cultivar where bud blindness compromises crop yield).

In the test on the cultivar Italia, the composition C2 was applied on three (3) different dates in order to assess the influence of the employment period on the outcome of the treatment; in particular, treatments were executed about 60, 45, and 30 days before blooming.

The tests on the cultivar Matilde and on the apyrene cultivar Sugraone were executed performing the treatments on two (2) different dates (about 60 days before blooming and about 45 days before blooming).

The compared theses were tested in all lots on parcels of five (5) plants repeated three (3) times on different rows. Treatments were executed using a volume of water of 600-800 l/ha; distribution took place with shoulder-bome pump (2-2.51/5 plants).

On each shoot of each plant, the phenological evolution of individual buds was tracked.

In particular, for the cultivar Italia, on 19 April 1997, average bud length was as follows:

| Control | C2 after 60 days | C2 after 45 days | C2 after 30 days |
|---|---|---|---|
| 3.8 cm | 10.2 cm | 6 cm | 4 cm |

In particular, for the cultivar Matilde, on 19 April 1997, average bud length was as follows:

| Control | C2 after 60 days | C2 after 45 days |
|---|---|---|
| 1.6 cm | 5.4 cm | 4.1 cm |

In particular, for the cultivar Sugraone, on 3 April 1997, average bud length was as follows:

| Control | C2 after 60 days | C2 after 45 days |
|---|---|---|
| 10.1 cm | 18.7 cm | 15 cm |

On the same dates, the percentage of mixed buds that failed to bloom was measured.

In particular, for the cultivar Italia on 19 April 1997, the percentages of blind buds were as follows:

| Control | C2 after 60 days | C2 after 45 days | C2 after 30 days |
|---|---|---|---|
| 25% | 12.5% | 22% | 25% |

In particular, for the cultivar Matilde on 19 April 1997, the percentages of blind buds were as follows:

| Control | C2 after 60 days | C2 after 45 days |
|---|---|---|
| 19% | 10% | 16% |

In particular, for the cultivar Sugraone on 3 April 1997, the percentages of blind buds were as follows:

| Control | C2 after 60 days | C2 after 45 days |
|---|---|---|
| 44% | 19% | 40% |

The above data, relating to the average length of the shoots and to the percentage of blind buds of the three cultivars being examined, evidence a different effect of the treatment with the composition C2 depending on its employment period.

Following treatment at about 60 days from the natural blooming of the buds, in the plants treated with the composition C2 blooming occurred markedly earlier, with subsequently resulted in a greater average length of the shoots relative to the control. In particular, the composition C2 caused a difference from the control of 6.4 cm in the cultivar Italia, of 3.8 cm in the cultivar Matilde and of 8.6 cm in the cultivar Sugraone. In the treatment at about 45 days from blooming, the control was again late relative to the treated plants but the differences, as shown above, were found to be lesser than those deriving from the previous treatment.

The treatment at about 30 days from blooming was executed in a lot that was found to be slightly late relative to the previous one; in any case, no difference emerged between the treated plants and the control in terms of blooming time.

The above data show how the percentage of buds that failed to bloom (blind buds) was influenced by the application of the composition C2 when it took place 60 days before blooming. The treated plants had a greater blooming of the buds at the base of the shoots (12.5% less in the cultivar Italy, 9% in the cultivar Matilde and 25% in the cultivar Sugraone). With the treatment at about 45 days from blooming, the composition C2 maintained a slight effect whereas with treatment at about 30 days no difference was noted between the cultivar Italia and the control.

The tests conducted on the different cultivars of grape have highlighted the possibility of bringing forward the vegetative awakening of the crop, of making blooming more homogeneous along the shoot. and of reducing the quantity of non-blooming buds at the base of the shoots.

These goals were achieved by using the composition C2 of the present invention at a concentration of 7% in association with calcium nitrate at a concentration of 20%.

To obtain the best performance from the composition C2, precocious application (60 days before blooming) was found very advantageous. Later applications brought lesser results.

The Applicant has verified the effectiveness of the composition C3 on the kiwi fruit crop by means of four tests conducted in Central and Southern Italy where the number of cold hours (T<7.2°C) during the 1997-98 season was less than 500. Advantageously, the Applicant employed the composition C3 at a concentration of 7% weight/volume and 10% weight/volume in association to calcium nitrate at a concentration of 20%. The difference between the application at 60 days and that at 45 days was also verified. The quantity of solution per plant was the one corresponding to a volume of 6-8 hl/ha. The following Table 2 shows the test program for the composition C3 of the present invention on the kiwi fruit.

| Thesis no. | Product + dose (w/v) | Vol. H₂O | days from awakening |
|---|---|---|---|
| 1. | Control | - | - |
| 2. | (C3, 7% + Calcium nitrate, 20%) | 8hl | 60 |
| 3. | (C3, 7% + Calcium nitrate, 20%) | 8hl | 45 |
| 4. | (C3, 10% + Calcium nitrate, 20%) | 8hl | 60 |

During the vegetative awakening phase, the ability of the composition C3 to simulate meeting cold demand was assessed by evaluating the extent to which bud dormancy interruption had been moved forward, which was obtained by measuring (once blooming was complete) the average length of the shoots on five branches per plant. Branches with the same number of buds were considered.

During the blooming phase, in the tests in which the parcels included both feminine plants of the cultivar Hayward and pollinators, the blooming start and end days were determined for both types of plants present in each parcel. Thus, the blooming simultaneity induced by the treatment with the composition C3 was determined.

The assessment of the reduction in the percentage of inflorescences with two or three flowers was conducted, at first, during their formation. Subsequently, at the time of manual pruning, the number of pruned fruits for each plant of the different parcels was measured. Obviously, the average value presents a direct relationship with the percentage of the aforesaid inflorescences with two or three flowers.

During the harvest phase, the percentage of triple fruits, of flat fruits, and of undersize fruits (weighing less than 65 grams) was measured, whilst in another case, in addition to undersize fruits, the average weight of the fruits was also measured.

In regard to the blooming capacity induced by the various theses in the locations where cold demand is not met (number of hours below 7.2°C less than 400-600), the use of the composition C3 at 7%, in association with calcium nitrate at 20%, caused an earlier bud dormancy interruption determining a difference from the control, in the different tests, of 4-6 cm. The increase in concentration of the composition C3 to 10% allowed a greater blooming capacity. Treatments executed 45 days before blooming have recorded a sharply smaller average blossom length than the one obtained with treatments at 60 days.

The percentage of the different flower types was also measured; the results are shown in Chart I attached hereto. In the control, the pollinators started and finished blooming before the female plants; hence, a part of the female plants (the tardier ones) were left without a source of pollen. The theses of the composition C3 at 7% and 10% allowed the female plants and the pollinators to bloom at the same time. A greater uniformity of the types of flowers (not bloomed flowers, just bloomed flowers and withered flowers) was noted between the two types of plants. Moreover, the treatment caused a reduction of the blooming period which is a condition for greater fruit size uniformity. Later treatments (at 45 days from awakening) had little effect in causing the two plants to bloom simultaneously and for in reducing blooming time. In the tests in which the control percentage was higher (30-60%), the composition C3 caused a marked reduction in the percentage of inflorescences with 2 or 3 flowers, used at 60 days from awakening both at the 7% and at the 10% dose (in association with 20% calcium nitrate); no significant difference emerged between the two doses. The result obtained from employing the composition C3 at 7% in association with calcium nitrate at 20% with application at 60 days from awakening was found to be compromised in the later application (at 45 days) for which no significant difference was found from the control in each of the tests in question.

The effect of this reduction in the percentage of inflorescences with two or three flowers was a lesser need for manual pruning: the number of pruned fruits had the same reduction observed for inflorescences with 2-3 flowers.

In the locations where cold demand is not met, the use of the composition C3 at the concentration of 7% weight/volume in association with calcium nitrate at the dose of 20% weight/volume brought about increased budding with earlier blooming. The increase in the dose of the composition C3 from 7% 10% in association with calcium nitrate still at 20% concentration allowed to obtain significant budding improvements.

The application of the composition C3, by determining a simultaneity in the blooming of the treated buds (also of different plants), favoured a greater simultaneity in the formation of male and female inflorescences. Hence, the blooming period was reduced with the consequent uniformity of fruit sizes; moreover, the blooming of plants of opposite sex coincided advantageously for the pollination process (because all flowers have pollen available).

The marked impact of the composition C3 on the reduction of the number of inflorescences with two or three flowers, which was subsequently reflected in a lesser number of fruits to prune, is very important. It provided a dual advantage: 1) savings in manual pruning; 2) increase in fruit size thanks to the early elimination of the competition for nutrition among the fruits. This pruning action of the composition C3, in the four tests conducted in Central and Southern Italy, varied from 45% to 82%. No significant differences emerged between the pruning results relating to the two dosages of the composition 3 from 7% concentration to 10%.

Lastly, the timing for product employment proved to be very important on the achievement of the different effects, as applications conducted 60 days before awakening had a sharply more significant impact than that of applications at 45 days.

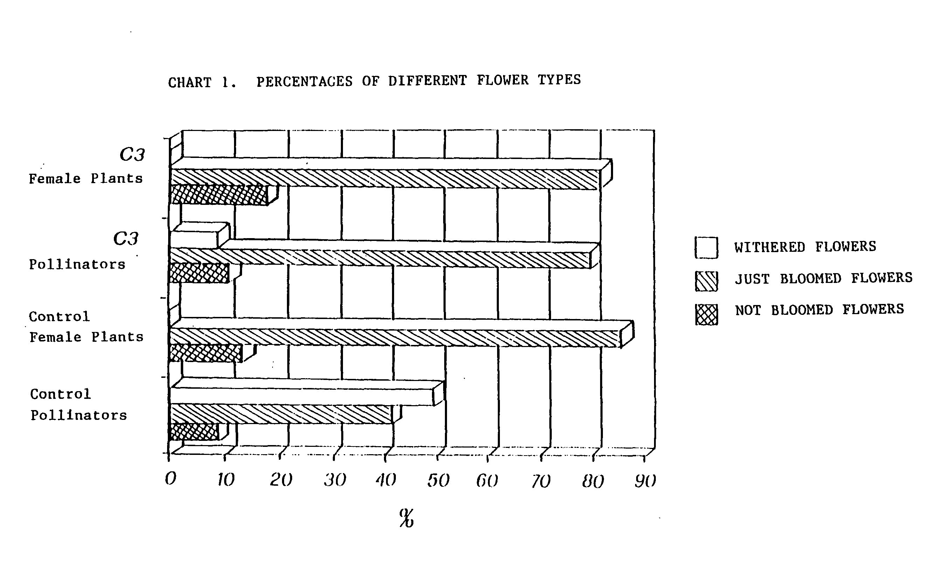

## Claims

1. A product for stimulating the interruption of dormancy of the buds of fruit-bearing plants, **characterized in that** it comprises an association of:
a) a composition comprising at least one compound selected from Group A and at least one compound selected from Group B, wherein:
- Group A consists of nitrates of alkaline metals or nitrates of earthy alkaline metals or ammonium nitrate;
- Group B comprises alkene oxides, selected from the group consisting of ethylene oxide and propylene oxide, made to react with nonylphenol or fatty acids or alkylpolyglucosides; in combination with
b) calcium nitrate.

2. The product as claimed in claim 1, **characterized in that** said composition of point a) contains the compounds of Group A and of Group B in a weight ratio ranging from 1:9 to 9:1.

3. The product as claimed in claim 2, **characterized in that** said composition of point a) contains the compounds of Group A and of Group B in a weight ratio ranging from 1:5 to 5:1.

4. The product as claimed in one or more of the previous claims, wherein in said composition of point a) the compound of Group A is selected among sodium nitrate, potassium nitrate, calcium nitrate, magnesium nitrate and ammonium nitrate.

5. The product as claimed in one or more of the claims from 1 to 4, wherein in said composition of point a) the compound of Group B is selected among nonylphenol made to react with ethylene oxide, lauric acid made to react with ethylene oxide, alkylpolyglucoside made to react with ethylene oxide.

6. The product as claimed in one or more of the claims from 1 to 5, wherein in said composition of point a) the compound of Group A is ammonium nitrate and the compound of Group B is selected among nonylphenol made to react with ethylene oxide, lauric acid made to react with ethylene oxide, alkylpolyglucoside made to react with ethylene oxide.

7. The product as claimed in one or more of the previous claims, **characterized in that** said composition of point a) further contains in addition to one or more compounds selected from Group A and to one or more compounds selected from Group B an organic matrix based on simple sugars selected from the group consisting of fructose, glucose, galacturose and a nitrogenous matrix based on organic nitrogen.

8. The product as claimed in claim 7, **characterized in that** said composition of point a) comprises:
- ammonium nitrate in a percentage ranging from 24 to 40% by weight;
- a compound selected among the following compounds such as ethylene oxide made to react with nonylphenol, lauric acid, alkylpolyglucoside, in a percentage ranging from 5 to 32% by weight;
- organic matrix based on simple sugars selected among fructose, glucose, galacturose, in a percentage ranging from 1 to 7% by weight;
- organic nitrogen-based nitrogenous matrix, in a percentage ranging from 1 to 11% by weight;
- aqueous solvent, in a percentage ranging from 10 to 42% by weight.

9. The product as claimed in claim 7, **characterized in that** said composition of point a) comprises:
- ammonium nitrate in a percentage ranging from 20 to 36% by weight;
- a compound selected among the following compounds such as ethylene oxide made to react with nonylphenol, lauric acid, alkylpolyglucoside, in a percentage ranging from 30 to 55% by weight;
- organic matrix based on simple sugars selected among fructose, glucose, galacturose, in a percentage ranging from 1 to 10% by weight;
- organic nitrogen-based nitrogenous matrix , in a percentage ranging from 1 to 10% by weight;
- aqueous solvent, in a percentage ranging from 10 to 40% by weight.

10. The product as claimed in claim 7, **characterized in that** said composition of point a) comprises:
- ammonium nitrate in a percentage ranging from 24 to 30% by weight;
- a compound selected among the following compounds such as ethylene oxide made to react with nonylphenol, lauric acid, alkylpolyglucoside, in a percentage ranging from 35 to 55% by weight;
- organic matrix based on simple sugars selected among fructose, glucose, galacturose, in a percentage ranging from 1 to 10% by weight;
- organic nitrogen-based nitrogenous matrix , in a percentage ranging from 1 to 10% by weight;
- citric acid, in a percentage ranging from 0.2 to 2% by weight;
- aqueous solvent, in a percentage ranging from 10 to 40% by weight.

11. The product as claimed in claim 8, in the form of an aqueous solution containing from 5 to 7% by weight of said composition of point a) in association with calcium nitrate in a concentration ranging from 9 to 12% by weight.

12. The product as claimed in claim 9, in the form of an aqueous solution containing 7% by weight of said composition of point a) in association with calcium nitrate in a concentration of 20% by weight.

13. The product as claimed in claim 10, in the form of an aqueous solution containing from 7 to 10% by weight of said composition of point a) in association with calcium nitrate in a concentration of 20% by weight.

14. Use of a product as claimed in one or more of the previous claims, to stimulate the interruption of dormancy of the buds of fruit-bearing plants.

15. Use as claimed in claim 14, wherein said fruit-bearing plants are plants with deciduous leaves.

16. Use as claimed in claim 14, wherein to said fruit-bearing plants is applied the product of claim 11.

17. Use as claimed in claim 14, wherein to said fruit-bearing plants is applied the product of claim 12.

18. Use as claimed in claim 14, wherein to said fruit-bearing plants is applied the product of claim 13.

19. Use of a composition of point a) as claimed in one or more of the claims from 1 to 10, for the preparation of products stimulating the interruption of dormancy of the buds of fruit-bearing plants.

## Patentansprüche

1. Ein Produkt zur Stimulation der Unterbrechung der Dormanz von Knospen von fruchttragenden Pflanzen, welches **dadurch** charakterisiert wird, dass es aus je einer der folgenden Verbindungen besteht:
a) eine aus mindestens einer Komponente aus Gruppe A und einer Komponente aus Gruppe B, wobei:
- Gruppe A aus Nitratverbindungen von Alkalimetallen oder Nitraten von Erdalkalimetallen oder Ammoniumnitraten besteht;
- Gruppe B aus Alkenoxiden besteht, welche aus einer Gruppe von Ethylenoxiden und Propylenoxiden gewählt werden, welche mit Nonylphenol oder Fettsäuren oder Alkylpolyglukosiden zur Reaktion gebracht werden
b) Kalziumnitrat

2. Das in Anforderung 1 beschriebene Produkt, welches durch die unter Punkt a) angegebene Zusammensetzung beschrieben wird, enthält die Komponenten aus Gruppe A und Gruppe B in einem Gewichtsverhältnis von 1:9 bis 9:1.

3. Das in Anforderung 2 beschriebene Produkt, welches durch die unter Punkt a) angegebene Zusammensetzung beschrieben wird, enthält die Komponenten aus Gruppe A und Gruppe B in einem Gewichtsverhältnis von 1:5 bis 5:1.

4. Das in einer oder mehr der bisherigen Anforderungen beschriebene Produkt, wobei in der unter Punkt a) angegebenen Zusammensetzung die Komponente aus Gruppe A aus Natriumnitrat, Kaliumnitrat, Kalziumnitrat, Magnesiumnitrat und Ammoniumnitrat gewählt wird.

5. Das in einer oder mehr der Anforderungen 1 bis 4 beschriebene Produkt, wobei in der unter Punkt a) angegebenen Zusammensetzung die Komponente aus Gruppe B aus Nonylphenol in Reaktion mit Äthylenoxid, Laurinsäure in Reaktion mit Äthylenoxid, Alkylpolyglukosid in Reaktion mit Äthylenoxid gewählt wird.

6. Das in einer oder mehr der Anforderungen 1 bis 5 beschriebene Produkt, wobei in der unter Punkt a) angegebenen Zusammensetzung die Komponente aus Gruppe A Ammoniumnitrat ist und die Komponente aus Gruppe B aus Nonylphenol in Reaktion mit Äthylenoxid, Laurinsäure in Reaktion mit Äthylenoxid, Alkylpolyglukosid in Reaktion mit Äthylenoxid gewählt wird.

7. Das in einer oder mehr der bisherigen Anforderungen beschriebene Produkt, welches durch die unter Punkt a) angegebene Zusammensetzung charakterisiert wird, enthält weiterhin zusätzlich zu einer oder mehr Komponenten aus Gruppe A und einer oder mehr Komponenten aus Gruppe B eine organische Matrize auf Basis von einfachen Zuckerverbindungen aus der Gruppe der Fruktosen, Glukosen, Galakturosen und eine stickstoffhaltige Matrize auf Basis von organischem Stickstoff.

8. Das in Anforderung 7 beschriebene Produkt, welches durch die unter Punkt a) angegebene Zusammensetzung charakterisiert wird, besteht aus:
- Ammoniumnitrat mit einem prozentualen Gewichtsanteil von 24 bis 40 %;
- einer Komponente, welche unter folgenden Komponenten mit einem Gewichtsanteil von 5 bis 32 % ausgewählt wird: Äthylenoxid in Reaktion mit Nonylphenol, Laurinsäure, Alkylpolyglukosid;
- einfachen Zuckerverbindungen aus der Gruppe der Fruktosen, Glukosen, Galakturosen mit einem prozentualen Gewichtsanteil von 1 bis 7%;
- einer stickstoffhaltigen Matrize auf Basis von organischem Stickstoff mit einem prozentualen Gewichtsanteil 1 bis 11 %;
- wässriger Lösung mit einem prozentualen Gewichtsanteil von 10 bis 42 %.

9. Das in Anforderung 7 beschriebene Produkt, welches durch die unter Punkt a) angegebene Zusammensetzung charakterisiert wird, besteht aus:
- Ammoniumnitrat mit einem prozentualen Gewichtsanteil von 20 bis 36 %;
- einer Komponente, welche aus folgenden Komponenten mit einem Gewichtsanteil von 30 bis 55% gewählt wird: Nonylphenol, Laurinsäure, Alkylpolyglukosid;
- einer organischen Matrize basierend auf einfachen Zuckerverbindungen aus der Gruppe der Fruktosen, Glukosen, Galakturosen mit einem prozentualen Gewichtsanteil von 1 bis 10%;
- einer stickstoffhaltigen Matrize auf Basis von organischem Stickstoff mit einem prozentualen Gewichtsanteil von 1 bis 10%;
- wässriger Lösung mit einem prozentualen Gewichtsanteil von 10 bis 42 %.

10. Das in Anforderung 7 beschriebene Produkt, welches durch die unter Punkt a) angegebene Zusammensetzung charakterisiert wird, besteht aus:
- Ammoniumnitrat mit einem prozentualen Gewichtsanteil von 24 bis 30 %;
- einer Komponente, welche aus folgenden Komponenten mit einem Gewichtsanteil von 35 bis 55% gewählt wird: Nonylphenol, Laurinsäure, Alkylpolyglukosid;
- einer organischen Matrize basierend auf einfachen Zuckerverbindungen aus der Gruppe der Fruktosen, Glukosen, Galakturosen mit einem prozentualen Gewichtsanteil von 1 bis 10%;
- einer stickstoffhaltigen Matrize auf Basis von organischem Stickstoff mit einem prozentualen Gewichtsanteil von 1 bis 10%;
- wässriger Lösung mit einem prozentualen Gewichtsanteil von 10 bis 40 %.

11. Das in Anforderung 8 beschrieben Produkt in Form einer wässrigen Lösung, welche 5 bis 7% Gewichtsanteil der in Punkt a) genannten Zusammensetzung in Verbindung mit Kalziumnitrat in einer Konzentration von 9 bis 12% (nach Gewichtsanteilen) enthält.

12. Das in Anforderung 9 beschrieben Produkt in Form einer wässrigen Lösung, welche 7% Gewichtsanteil der in Punkt a) genannten Zusammensetzung in Verbindung mit Kalziumnitrat in einer Konzentration von 20% (nach Gewichtsanteilen) enthält.

13. Das in Anforderung 10 beschrieben Produkt in Form einer wässrigen Lösung, welche 7 bis 10% Gewichtsanteil der in Punkt a) genannten Zusammensetzung in Verbindung mit Kalziumnitrat in einer Konzentration von 20% (nach Gewichtsanteilen) enthält.

14. Die Verwendung eines Produktes wie in den bisherigen Anforderungen beschrieben, welches zur Stimulation der Unterbrechung der Dormanz von Knospen von fruchttragenden Pflanzen dient.

15. Die Verwendung wie in Anforderung 14 beschrieben, wobei die genannten fruchttragenden Pflanzen, Pflanzen mit Laubblättern sind.

16. Die Verwendung wie in Anforderung 14 beschrieben, wobei auf die genannten fruchttragenden Pflanzen ein Produkt nach Anforderung 11 angewandt wird.

17. Die Verwendung wie in Anforderung 14 beschrieben, wobei auf die genannten fruchttragenden Pflanzen ein Produkt nach Anforderung 12 angewandt wird.

18. Die Verwendung wie in Anforderung 14 beschrieben, wobei auf die genannten fruchttragenden Pflanzen ein Produkt nach Anforderung 13 angewandt wird.

19. Die Verwendung einer Zusammensetzung nach Punkt a), wie in einer oder mehr der Anforderungen 1 bis 10 angegeben, zur Präparation von Produkten zur Stimulation der Unterbrechung der Dormanz von Knospen von fruchttragenden Pflanzen.

## Revendications

1. Produit destiné à stimuler l'interruption de la dormance des bourgeons de plants fruitières, **caractérisé en ce qu'**il comporte une association de:
a) une composition comprenant au moins un composé choisi parmi le Groupe A et au moins un composé choisi parmi le Groupe B, dans laquelle:
- le Groupe A se compose de nitrates de métaux alcalins ou nitrates de métaux alcalino-terreux ou nitrates d'ammonium;
- le Groupe B se compose d'oxydes d'alcène, choisis parmi le groupe comprenant oxydes d'éthylène et oxydes de propylène, qui sont faits réagir avec des acides nonylphénoliques ou des acides gras ou des alcoyl-polyglucosides; en combinaison avec
b) du nitrate de calcium.

2. Produit selon la revendication 1, **caractérisé en ce que** ladite composition du point a) contient les composés du Groupe A et du Groupe B selon un rapport en poids compris entre 1:9 et 9:1.

3. Produit selon la revendication 2, **caractérisé en ce que** ladite composition du point a) contient les composés du Groupe A et du Groupe B selon un rapport en poids dans la gamme de 1:5 à 5:1.

4. Produit selon une ou plusieurs des revendications précédentes, dans lequel dans ladite composition du point a) le composé du Groupe A est choisi parmi nitrate de sodium, nitrate de potassium, nitrate de calcium, nitrate de magnésium et nitrate d'ammonium.

5. Produit selon une ou plusieurs des revendications 1 à 4, dans lequel dans ladite composition du point a) le composé du Groupe B est choisi parmi le nonylphénol qui est fait réagir avec l'acide d'éthylène, l'acide laurique qui est fait réagir avec l'oxyde d'éthylène, l'alcoyl-polyglucoside qui est fait réagir avec l'oxyde d'éthylène.

6. Produit selon une ou plusieurs des revendications 1 à 5, dans lequel dans ladite composition du point a) le composé du Groupe A est nitrate d'ammonium et le composé du Groupe B est choisi parmi le nonylphénol qui est fait réagir avec l'oxyde d'éthylène, l'acide laurique qui est fait réagir avec l'oxyde d'éthylène, l'alcoyl-polyglucoside qui est fait réagir avec l'oxyde d'éthylène.

7. Produit selon une ou plusieurs des revendications précédentes, **caractérisé en ce que** ladite composition du point a) contient également, en plus d'un ou plusieurs composés choisis parmi le Groupe A et d'un ou plusieurs composés choisis parmi le Groupe B, une matrice organique basée sur des sucres simples choisis parmi le groupe comprenant fructose, glucose, galactose, et une matrice azotée à base d'un azote organique.

8. Produit selon la revendication 7, **caractérisé en ce que** ladite composition du point a) comporte:
- du nitrate d'ammonium selon un pourcentage compris entre 24 et 40% en poids:
- un composé choisi parmi les composés tels que l'oxyde d'éthylène qui est fait réagir avec le nonylphénol, l'acide laurique, l'alcoyl-polyglucoside, selon un pourcentage compris entre 5 et 32% en poids;
- une matrice organique à base de sucres simples choisis parmi fructose, glucose, galactose, selon un pourcentage dans une gamme de 1 à 7% en poids;
- une matrice azotée à base d'azote organique, selon un pourcentage dans une gamme de 1 à 11% en poids;
- un solvant aqueux selon un pourcentage compris entre 10 et 42% en poids.

9. Produit selon la revendication 7, **caractérisé en ce que** ladite composition du point a) comporte:
- du nitrate d'ammonium selon un pourcentage dans la gamme de 20 à 36% en poids;
- un composé choisi parmi les composés tels que l'oxyde d'éthylène qui est fait réagir avec le nonylphénol, l'acide laurique, l'alcoyl-polyglucoside, selon un pourcentage compris entre 30 et 55% en poids;
- une matrice organique à base de sucres simples choisis parmi fructose, glucose, galactose, selon un pourcentage compris entre 1 et 10% en poids;
- une matrice azotée à base d'azote organique, selon un pourcentage compris entre 1 et 10% en poids;
- un solvant aqueux selon un pourcentage compris entre 10 et 40% en poids.

10. Produit selon la revendication 7, **caractérisé en ce que** ladite composition du point a) comporte:
- du nitrate d'ammonium selon un pourcentage dans la gamme de 24 à 30% en poids;
- un composé choisi parmi les composés tels que l'oxyde d'éthylène qui est fait réagir avec le nonylphénol, l'acide laurique, l'alcoyl-polyglucoside, selon un pourcentage compris entre 35 et 55% en poids;
- une matrice organique à base de sucres simples choisis parmi fructose, glucose, galactose, selon un pourcentage dans la gamme de 1 à 10% en poids;
- une matrice azotée à base d'azote organique, selon un pourcentage dans la gamme de 1 à 10% en poids;
- de l'acide citrique selon un pourcentage compris entre 0,2 et 2% en poids;
- un solvant aqueux selon un pourcentage compris entre 10 et 40% en poids.

11. Produit selon la revendication 8, sous forme d'une solution aqueuse contenant 5 à 7% en poids de ladite composition du point a) en association avec du nitrate de calcium selon une concentration comprise entre 9 et 12% en poids.

12. Produit selon la revendication 9, sous forme d'une solution aqueuse contenant 7% en poids de ladite composition du point a) en association avec du nitrate de calcium selon une concentration de 20% en poids.

13. Produit selon la revendication 10, sous forme d'une solution aqueuse contenant 7 à 10% en poids de ladite composition du point a) en association avec du nitrate de calcium dans une concentration de 20% en poids.

14. Utilisation d'un produit selon une ou plusieurs des revendications précédentes, pour stimuler l'interruption de la dormance des bourgeons de plantes fruitières.

15. Utilisation selon la revendication 14, dans laquelle lesdites plantes fruitières sont des plantes à feuilles caduques.

16. Utilisation selon la revendication 14, dans laquelle auxdites plantes fruitières on applique le produit de la revendication 11.

17. Utilisation selon la revendication 14, dans laquelle auxdites plantes fruitières on applique le produit de la revendication 12.

18. Utilisation selon la revendication 14, dans laquelle auxdites plantes fruitières on applique le produit de la revendication 13.

19. Utilisation d'une composition du point a) selon une ou plusieurs des revendications 1 à 10, pour la préparation de produits en mesure de stimuler l'interruption de la dormance des bourgeons de plantes fruitières.
